Europäisches Patentamt

European Patent Office

Office européen des brevets

(11) Veröffentlichungsnummer: **0 330 659**
**B1**

(12) **EUROPÄISCHE PATENTSCHRIFT**

(45) Veröffentlichungstag der Patentschrift: **19.12.90**

(21) Anmeldenummer: **87906743.7**

(22) Anmeldetag: **14.10.87**

(86) Internationale Anmeldenummer:
**PCT/EP87/00600**

(87) Internationale Veröffentlichungsnummer:
**WO 88/02655 21.04.88 Gazette 88/09**

(51) Int. Cl.$^5$: **B 01 D 17/02**, B 01 D 37/02,
C 02 F 1/40, B 01 J 20/20,
C 02 F 1/28, B 01 D 15/00

(54) **VERFAHREN ZUR ABTRENNUNG VON KOHLENWASSERSTOFFEN AUS ABWÄSSERN.**

(30) Priorität: **18.10.86 DE 3635461**

(43) Veröffentlichungstag der Anmeldung:
**06.09.89 Patentblatt 89/36**

(45) Bekanntmachung des Hinweises auf die
Patenterteilung:
**19.12.90 Patentblatt 90/51**

(84) Benannte Vertragsstaaten:
**AT BE DE FR GB IT LU NL SE**

(56) Entgegenhaltungen:
EP-A-0 056 926    US-A-3 253 714
DE-A-1 517 628    US-A-3 424 676
DE-A-2 252 777

Brennstoff-Wärme-Kraft, volume 27, n 7, July
1975, V D I editor (Düsseldorf, DE), F H Franke et
al.:"Untersuchungen zur Abgas-und
Abwasserreinigung mit adsorptionskoksen aus
Braunkohle", pages 284-287, see page 284, table
1; pages 285-286 "Abwasserreinigung mit
Braunkohlenkoksen"

(73) Patentinhaber: **Bergwerksverband GmbH**
**Franz-Fischer-Weg 61**
**D-4300 Essen 13 (DE)**

(72) Erfinder: **ROMEY, Ingo**
**Sandkamp 25**
**D-4224 Hünxe (DE)**
Erfinder: **PA , Reinhard**
**Hagelkreuz 32**
**D-4300 Essen 1 (DE)**

**Beschreibung**

Die Erfindung betrifft ein Verfahren zur Abtrennung von Kohlenwasserstoffen, insbesondere von aromatischen Kohlenwasserstoffen aus Abwässern mit einem adsorbierenden Filterhilfsmittel.

Bei verschiedenen technischen Verfahren, unter anderem auch bei der Verkokung von Steinkohle, fallen Abwässer an, die mit Kohlenwasserstoffen kontraminiert sind. Vor allem die möglicherweise im Abwasser enthaltenen polyzyklischen Kohlenwasserstoffe (PAH) müssen weitestgehend abgetrennt werden. Insbesondere biologische Abwasserstufen werden durch eine hohe Konzentration an Kohlenwasserstoffen zusätzlich belastet.

Andere Verfahren der Abwasserreinigung, z. B. reverse Osmose oder adsorptive Aufarbeitung benötigen eine Vorreinigungsstufe.

Abhängig von ihrer Konzentration oder chemischen Zusammensetzung sind die im Abwasser enthaltenen Kohlenwasserstoffe teilweise gelöst, teilweise an die in den Abwässern enthaltenen Partikeln gebunden.

Erwünscht ist deshalb ein Reinigungsverfahren, welches sowohl die wasserunlöslichen, als auch die an den Feststoffen gebundenen Kohlenwasserstoffe gleichzeitig abtrennt.

Für die Abtrennung von Kohlenwasserstoffen aus Kokereiabwässern wurde deshalb schon vorgeschlagen, eine wenigstens teilweise wirksame Abtrennung durch Filtration über ein Filterhilfsmittel aus Holzmehl in einem Vakuumtrommelfilter zu erreichen (Fachberichte Hüttenpraxis Metallverarbeitung, Vol. 22 Nr. 10, 1984, 1088 — 1092). Dieses Filterhilfsmittel wird durch das Eindringen der feinen Partikeln schnell verstopft, so daß eine äußere, dünne Filterschicht ständig von einem Schaber abgetragen werden muß. Besonders die Verwendung von Holzmehl als Filterhilfe in Verbindung mit einem Vakuumtrommelfilter führt wegen des durch die Rotation der Trommel bedingten schnellen Wechsels von Durchnässen und Trocknen der Filterschicht zu sogenannten Trockenrissen, die zu Suspensionsdurchbrüchen führen. Große Filterkuchenschichtdicken begünstigen Trockenrisse.

Holzmehl als Filterhilfsmittel stellt häufig eine betriebsfremde Substanz dar und beeinträchtigt deshalb die Wirtschaftlichkeit des Verfahrens nicht unerheblich.

Ebenso entstehen durch die Anwendung von Vakuum zur Trocknung des Filterkuchens erhebliche Kosten.

Neben dem Holzmehl als Filterhilfsmittel wurden weitere handelsübliche Filterhilfen eingesetzt; z. B. Kieselgur, Celite oder Cellulose. Vor allem aus Kostengründen oder wegen zusätzlicher Probleme bei der Entsorgung des Filtrierrückstandes wird der Einsatz derartiger Filterhilfen erschwert.

Für eine reine adsorptive Abwasserreinigung ist die Verwendung von Aktivkohlen oder -koksen möglich (VDI Forschungsheft Nr. 607/1981). Dieses Verfahren erfordert allerdings einen hohen technischen Einsatz zur Regenerierung der Adsorbentien, da sich eine Entsorgung von beladenen Aktivkohlen auf andere Weise (Verbrennen oder Lagern) insbesondere aus Kostengründen verbietet. Außerdem muß das Abwasser bei adsorptiver Reinigung weitgehend feststofffrei sein. Die oft in den Abwässern enthaltenen Feststoffe sind somit für die adsorptive Abwasserreinigung äußerst schädlich. Diese Feststoffe reichern sich im Adsorbens an und können auch bei der Regenerierung von Aktivkohle nicht vollständig entfernt werden. Die Leistung des Adsorbens nimmt folglich ab. Eine Abtrennung von festen Begleitstoffen muß also gesondert vor der adsorptiven Reinigungsstufe erfolgen.

Ein weiteres Verfahren zur Reinigung von Abwässern ist die reverse osmose. Dieses Reinigungsverfahren versetzt den Betreiber in die Lage, die in Lösung befindlichen Schadstoffe aufzukonzentrieren und ein nahezu schadstofffreies Permeat zu erhalten. Schädlich sind dabei jedoch unlösliche und kolloidale Begleitstoffe die die reverse osmose Membran verblocken (verstopfen). Ein relatives Maß für die Verstopfungswirkung von Suspensionen ist der Verblockungsindex. Die Methode zur Bestimmung des Verblockungsindex ist in der ASTM-Vorschrift D 4189-82 "Silt Density Index of Water" beschrieben. Versuche haben gezeigt, daß bei einem Verblockungsindex kleiner drei beim Betrieb von Umkehrosmosanlagen ein Verstopfen der Membranen nicht zu erwarten ist. Die für die reverse Osmose notwendige Vorreinigung der Suspension zur Reduzierung des Verblockungsindex wird z. B. durch Verwendung von Einweg-Filterpatronen oder Rückspülfiltern durchgeführt.

Der vorliegenden Erfindung liegt die Aufgabe zugrunde, ein Verfahren für die Abtrennung von Kohlenwasserstoffen, besonders von aromatischen Kohlenwasserstoffen aus Abwässern zu entwickeln, bei dem nicht nur die an Feststoffpartikeln gebundenen Kohlenwasserstoffe durch Filtration aus dem Abwasser abgetrennt werden, sondern gleichzeitig auch die im Abwasser gelösten, häufig in hohen Konzentrationen enthaltenen Kohlenwasserstoffe mit abgeschieden werden.

Diese Aufgabe wird bei dem erfindungsgemäßen Verfahren dadurch gelöst, daß gemäß Anspruch 1 die im Abwasser gelösten und ungelösten Kohlenwasserstoffe einstufig abgetrennt werden, indem die Abwässer einem metallischen Spaltkerzenfilter aufgegeben werden und als adsorbierendes Filterhilfsmittel ein Koksgrus dient, dessen Korngrößenverteilung für den Körnungsbereich von 0,05—0,2 mm einen Massenanteil von mindestens 25 Gew.-%, mit einer Oberfläche von mindestens 1500 cm$^2$/g hat. Das vorgeschlagene Verfahren vereinigt die Feststoffabtrennung mit einer weitgehenden Abtrennung von Kohlenwasserstoffen in einer Weise, die gegenüber der Filtration mit Drehtrommelfiltern und Holzmehlfilterhilfe erhebliche verfahrenstechnische Vorteile bietet.

Neben dem Effekt, den Partikeln eine mechanische Sperre zu bieten, hat der Koksgrus eine adsorptive Wirkung, so daß neben den an die Partikeln anhaftenden Kohlenwasserstoffen auch die im Wasser gelösten Kohlenwasserstoffe in der Filterschicht gebunden werden.

Die auf die Spaltfilterkerzen aufgebrachte Filterschicht ist während des gesamten Filtrationsvorganges vollständig vom Abwasser bedeckt, so daß die vom Vakuumtrommelfilter bekannten Trockenrisse in der Filterschicht nicht entstehen können.

Da die Korngrößenverteilung des Koksgruses einen Massenanteil von mindestens 25 Gew.-% des Körnungsbereiches von 0,05 bis 5 0,2 mm ausmacht, und die äußere Oberfläche des zu verwendenden Koksgruses mindestens 1500 cm$^2$/g beträgt, ist gleichermaßen die Durchlässigkeit der Filterschicht und ein hoher Klärgrad für feste Begleitstoffe und gelöste Kohlenwasserstoffe gegeben. Die äußere Oberfläche ergibt sich aus der Körnungsverteilung, die im logarithmischen Normalverteilungsnetz nach DIN 66144 dargestellt ist.

Durch das Verfahren können mittlere Abscheideleistungen für die an die Partikeln gebundenen polyzyklischen Kohlenwasserstoffe bis zu etwa 98% erreicht werden; die Filtratkonzentration für die drei- und mehrkernigen Aromaten liegen ausnahmslos unterhalb der Analysegrenze. Für gelöste Kohlenwasserstoffe können ebenfalls, je nach der Einsatzmenge an Koksgrus, Abscheideleistungen bis zu etwa 98% erreicht werden.

Filtrationsapparate mit metallischen Spaltfilterkerzen zur Abtrennung der Kohlenwasserstoffe sind z. B. aus DE—PS 27 06 938 und aus DE—PS 28 28 976 bekannt.

Die Korngrößenverteilung des Körnungsbereiches von 0,05 bis 0,2 mm sollte einen Massenanteil von mindestens 40% (Anspruch 2) haben, wenn eine noch bessere Durchlässigkeit des Filtermaterials notwendig ist.

Der Koksgrus, der bei der Herstellung von metallurgischem Koks anfällt, wird einer entsprechenden Aufbereitung, d. h. Aufmahlung und Absiebung, unterzogen.

Je nach Zusammensetzung des Wassers kann es vorteilhaft sein, entweder eine Filterschicht aus Koksgrus der vorgenannten Körnung auf die Filterkerzen anzuschwemmen (Anspruch 4) und/oder den Koksgrus dem Abwasser vor der Filtration (Anspruch 5) zuzugeben. Im zweiten Fall ist es besonders vorteilhaft, daß schon vor der Filtration eine Adsorption von im Abwasser enthaltenen gelösten Kohlenwasserstoffen ermöglicht wird. Der Koksgrus kann auf die vorangeschwemmte Filterschicht und auf die Zudosierung im Verhältnis von 80 : 20 bis 30 : 70 aufgeteilt werden.

Die Gesamtmenge beträgt zweckmäßig 0,1 Gew.-% bis 1 Gew.-% Filterhilfsmittel, bezogen auf die Abwassermenge (Anspruch 6).

Nach Ende der Filtration, d. h. wenn die adsorptive Wirkung der Filterschicht erschöpft ist oder wenn durch zunehmende Partikeleinlagerung in die Filterschicht ein unvertretbar hoher Strömungswiderstand entstanden ist, wird die Filterschicht durch Hindurchleiten von Preßluft getrocknet und in fester Form ausgetragen. Dieser, abgesehen von anhaftendem Restwasser nahezu vollständig aus Kohlenstoff bestehende Filtrierrückstand, hat einen geringen Restfeuchtegehalt und kann durch Verbrennung oder durch Pyrolyse entsorgt werden (Anspruch 7), z. B. kann er im Fall der Abwasserreinigung in Kokereien der Kokskohle zugesetzt werden.

Bei besonders hohen Ansprüchen an die Abwasserqualität ist auch eine Kombination des vorgeschlagenen Filtrationsverfahrens mit der reinen adsorptiven Abwasserreinigung (Anspruch 8) oder mit der Abwasserreinigung durch reverse Osmose (Anspruch 9) möglich. In beiden Fällen wird eine Entlastung des Adsorbens bzw. der reversen Osmose von Feststoffen erreicht bzw. die Anwendung dieser Verfahren überhaupt ermöglicht.

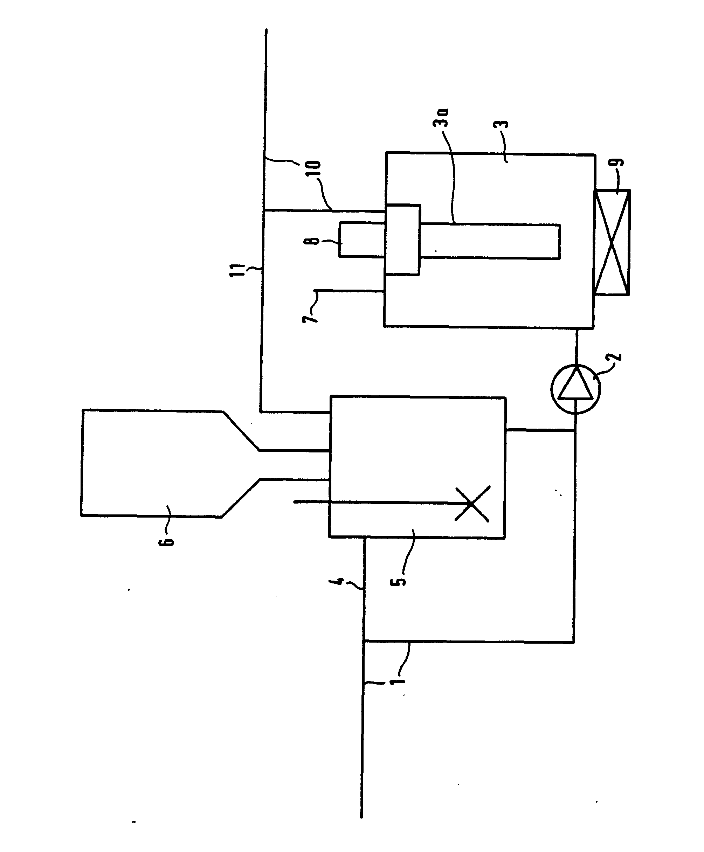

Die Erfindung wird nachfolgend anhand der Zeichnung und der Beispiele näher beschrieben.

Die einzige Figur zeigt eine schematische Darstellung der Verfahrensführung zur Abtrennung von Kohlenwasserstoffen aus Abwässern mittels Kerzenfiltration.

Ein mit Kohlenwasserstoffen beladenes Abwasser aus der Abwasserleitung 1 wird mit einer pumpe 2 in einen Filterapparat 3 mit Spaltfilterkerzen 3a geleitet. Die Verunreinigungen werden zusammen mit einem absorbierenden Filterhilfsmittel auf den Filterkerzen 3a zurückgehalten. Das gereinigte Wasser wird über Leitung 10 abgeführt. Über eine Bypassleitung 4 kann dieser Abwasserstrom vor Einspeisung in den Filterapparat 3 durch einen Anschwemmtank 5 gefördert werden, indem aus einem Silo 6 das adsorbierende Filterhilfsmittel zudosiert wird. Durch diese Schaltungsmöglichkeit kann entweder das adsorbierende Filterhilfsmittel vor der eigentlichen Filtration auf die Spaltfilterkerzen 3a aufgebracht werden (Precoat) und/oder dem Abwasserstrom kontinuierlich zugegeben werden (Bodyfeed). Der Vorauftrag von Filterhilfsmittel auf die Spaltfilterkerze 3a geschieht in der Weise, daß zu der noch im Behälter 5 vorliegenden Restentleerung des vorangegangenen Filtrationsvorganges das adsorbierende Filterhilfsmittel aus dem Silo 6 zudosiert wird. Diese Suspension wird mittels der Pumpe 2 über die Spaltfilterkerzen 3a und über die Leitung 11 in den Anschwemmtank 5 im Kreislauf gefördert, bis sich ca. 90% des vorgelegten Filterhilfsmittels als Filterschicht an den Spaltfilterkerzen abgeschieden haben. Nach Erreichen eines Grenzwertes für den Strömungswiderstand und/oder nach Erschöpfung des adsorbierenden Filterhilfsmittels wird die Filtration abgebrochen. Dazu dient ein Druckluftpolster, das über die Leitung 7 an die Trübeseite der Filterkerze 3a angelegt ist. Dadurch wird der Filterinhalt in den Anschwemmtank 5 entleert; die Druckluft durchströmt die Filterschicht und befreit sie weitgehend von anhaftendem Restwasser.

Die getrocknete Filterschicht kann durch eine pneumatische Klopfvorrichtung 8 vollständig von den Spaltfilterkerzen 3a abgereinigt und über eine Schleuse 9 aus dem Filterapparat 3 ausgetragen werden.

## Beispiel 1

In einer Anlage gemäß Zeichnung wurde ein durch ein Kiesfilter vorgereinigtes Abwasser aus einer Kokerei mit einem Filterapparat 3 mit Spaltfilterkerzen 3a (Filterfläche = 250 cm²; Spaltweite der Filterkerze = 0,075 mm) behandelt. Um eine adsorbierende Filterschicht von 10 mm Schichtdicke auf die Spaltfilterkerze 3a aufzubringen, wurde der Abwasserstrom aus Leitung 1 mit einer Geschwindigkeit von 5 m³/m²h über Leitung 4 durch den Anschwemmtank 5, in dem eine Menge von 8 kg Koksgrus/m² Filterfläche vorgelegt war, geleitet, bevor das Abwasser in den Filterapparat 3 gelangte.

Der eingesetzte Koksgrus stammte von einer Kokerei und hatte eine Körnung von 29 Gew.-% zwischen 0,06 und 0,2 mm.

Nach vollständigem Anschwemmen der Filterhilfsschicht wurde das Abwasser ohne weitere Zudosierung von Koksgrus direkt in den Filterapparat 3 eingeleitet.

Bei einem durch die Pumpe 2 erzeugten Differenzdruck von 2,5 bar wurde zu Beginn der Filtration eine strömungsgeschwindigkeit von 2,5 m³/m²h, bei Ende der Filtration eine Geschwindigkeit von 1,4 m³/m²h erreicht. Die Filtration wurde abgebrochen, nachdem die durchgesetzte Filtratmenge das 100-fache der vorgelegten Koksgrusmenge erreicht hatte.

Die Konzentration der im Filtrat noch enthaltenen ungelösten polyzyklischen Aromaten lagen unterhalb der Nachweisgrenze, was einer Abscheidung > 99% entspricht. Die im Abwasser zu 6 mg/l gelösten Bestandteile konnten durch die adsorptive Wirkung der Koksgrusfilterschicht um 95% vermindert werden.

Der bei der Filtration erhaltene Filtrierrückstand konnte ohne Umweltbeeinträchtigung durch Zumischung zur Kokskohle entsorgt werden.

Die genauen Analysedaten finden sich in der Tabelle. Ein Vergleich mit Daten aus einer Filtration mit Holzmehlfilterhilfe ist ebenfalls in der Tabelle niedergelegt. Daraus ist zu ersehen, daß von den 14 aufgeführten unlöslichen Verbindungen die Konzentration von 10 Verbindungen durch Filtration bis unterhalb ihrer Nachweisgrenze von 0,1 g/l reduziert wurden. Von den verbliebenen vier Verbindungen wurden drei zu 99% abgetrennt. Das Vergleichsbeispiel zeigt eine Reduzierung bis auf die Nachweisgrenze der im Rohwasser nachgewiesenen Verbindungen nur für acht Verbindungen. Die Abscheidegrade der restlichen Verbindungen schwanken zwischen 56 und 99%. Angaben über die Abtrennung der gelöst vorliegenden Verbindungen werden im Vergleichsbeispiel nicht getroffen.

## Beispiel 2

Bei diesem Versuch wurde wie im Beispiel 1 eine Filterschicht aus Koksgrus vorgelegt, die in diesem Fall aber nur 2 mm Schichtdicke hatte. Nach Anschwemmen dieser Filterschicht wurde das Kokereiabwasser allerdings nicht direkt in den Filterapparat 3 gespeist, sondern weiterhin über den Anschwemmtank 5 geleitet, in dem das Abwasser über das Silo 6 kontinuierlich mit Koksgrus in einer Menge von 0,1% versehen wurde. Das Mengenverhältnis von vorgelegter Koksgrusfilterschicht zu der zudosierten Koksgrusmenge hat 1 : 3 betragen.

Bei einem durch die Pumpe 2 erzeugten Differenzdruck von 2,5 bar wurde zu Beginn der Filtration eine Strömungsgeschwindigkeit von 3,5 m³/m²h erreicht, bei Ende der Filtration betrug die Strömungsgeschwindigkeit noch 2,0 m³/m²h.

Die Filtration wurde abgebrochen, nachdem die durchgesetzte Filtratmenge das 2000-fache der vorgelegten Koksgrusmenge erreicht hatte.

Die Konzentration der im Filtrat noch enthaltenen, unlöslichen polyzyklischen Kohlenwasserstoffe lag unterhalb der Nachweisgrenze. Die Abscheidung für möglicherweise cancerogenwirkende in Wasser unlösliche PAH betrug ca. 99%. Die Abscheidung für in Wasser gelöste aromatische Kohlenwasserstoffe betrug 90%.

## Beispiel 3

In diesem Beispiel wurde wie in Beispiel 1 verfahren. Als adsorbierendes Filterhilfsmittel kam hier ein Kokereikoksgrus zum Einsatz, dessen Partikel für den Körnungsbereich von 0,06 bis 0,2 mm einen Anteil von 40 Gew.-% aufwiesen. Besonders das Unterkorn < 0,06 mm wurde reduziert.

Bei einem durch die Pumpe 2 erzeugten Differenzdruck von 2,5 bar betrug die Strömungsgeschwindigkeit des Kokereiabwassers zu Filtrationsbeginn 4,2 m³/m²h. Nachdem die Filtratmenge das 200-fache der als Filterschicht vorgelegten Koksgrusmenge erreicht hatte, betrug die Strömungsgeschwindigkeit 2,7 m³/m²h.

Die Abscheideleistung der unlöslichen PAH betrug 95%; die der löslichen aromatischen Kohlenwasserstoffe betrug 93%.

## Beispiel 4

Ein aus einer Teerkondensation einer Kokerei stammendes Abwasser mit einer Belastung von ca. 8 g/l in Äther extrahierbaren Anteilen wurde wie in Beispiel 1 über eine Koksgrusschicht von 10 mm bei einem Differenzdruck von 2 bar filtriert. Es stellte sich eine mittlere Strömungsgeschwindigkeit von 2 m³/m²h ein.

Das Filtrat hatte einen Verblockungsindex von 3. Ein verblockungsindex der Suspension konnte wegen des hohen Gehaltes an organischen Bestandteilen nicht bestimmt werden; die dazu eingesetzte Testmembran war sofort verstopft.

Anschließend wurde das Filtrat zur Weiterverarbeitung durch reverse osmose eingesetzt. Es wurde kein Verblocken der Membran beobachtet.

### TABELLE
Analysenergebnis aus Beispiel 1, Vergleichsbeispiel

| Bezeichnung Verbindung | Kokerei-rohwasser µg/l | Abwasser-filtrat µg/l | Abscheide-leistung % | Filtrier-rückstand mg/l | Vergleichsbeispiel (aus Fachberichte Hüttenpraxis Vol. 22, Nr. 10, 1984 S. 1092 Tabelle 2) | | |
| --- | --- | --- | --- | --- | --- | --- | --- |
| | | | | | Roh-wasser ppb | Filtrat ppb | Abscheide-leistung % |
| unlösliche KW | | | | | | | |
| Fluoren | 21,8 | 1,4 | 94 | 0,07 | 9 | 4 | 56 |
| Phenanthren | 34 | 0,2 | 99 | 0,83 | 16 | 3 | 81 |
| Anthracen | 1,1 | —[1] | —[2] | 0,11 | —[1] | —[1] | — |
| Fluoranthen | 17,1 | 0,1 | 99 | 0,63 | 121 | 6 | 95 |
| Pyren | 16,0 | 0,2 | 99 | 0,24 | 134 | 2 | 99 |
| Benz(a)antraan | 1,6 | | | — | 672 | —[1] | —[2] |
| Crysen | 1,4 | | | — | 241 | —[1] | —[2] |
| Benzo(e)pyren | 3,8 | | | — | 161 | 1 | 99 |
| Benzo(b)fluoranthen | 2,7 | —[1] | —[2] | 0,07 | 550 | | |
| Benzo(k)fluoranthen | 1,7 | | | 0,17 | | | |
| Benzo(a)pyren | 3,6 | | | 0,08 | 325 | —[1] | —[2] |
| Dibenz(a,H)antracen | <0,1 | | | 0,19 | — | | |
| Benzo(g,h,i)perlyen | 0,6 | | | 0,14 | 190 | | |
| Indeno(1,2,3-cd)pyren | 1,1 | | | 0,14 | — | | |
| lösliche KW | | | | | | | |
| Naphthalin | 5 900 | 302 | 95 | 9,23 | | | |
| 2-Methylnaphthalin | 175 | 4,2 | 98 | 3,96 | | | |
| 1-Methylnaphthalin | 1,4 | —[1] | —[2] | 0,29 | | | |

[1] Wert liegt unterhalb der Nachweisgrenze
[2] Abscheideleistung nicht bestimmbar, da Konzentration unterhalb der Nachweisgrenze

## EP 0 330 659 B1

### Patentansprüche

1. Verfahren zur Abtrennung von Kohlenwasserstoffen, insbesondere von aromatischen Kohlenwasserstoffen, aus Abwässern mit einem adsorbierenden Filterhilfsmittel, dadurch gekennzeichnet, daß die im Abwasser gelösten und ungelösten Kohlenwasserstoffe einstufig abgetrennt werden, indem die Abwässer einem metallischen Spaltkerzenfilter aufgegeben werden und als adsorbierendes Filterhilfsmittel Koksgrus dient, dessen Korngrößenverteilung für den Körnungsbereich von 0,05 bis 0,2 mm einen Massenanteil von mindestens 25 Gew.-%, mit einer Oberfläche von mindestens 1500 cm²/g hat.

2. Verfahren nach Anspruch 1, dadurch gekennzeichnet, daß die Korngrößenverteilung des Koksgruses für den Körnungsbereich von 0,05 bis 0,2 mm einen Massenanteil von mindestens 40 Gew.-% hat.

3. Verfahren nach Anspruch 1, dadurch gekennzeichnet, daß der Koksgrus auf die Filterfläche vorangeschwemmt wird.

4. Verfahren nach Ansprüch 1, dadurch gekennzeichnet, daß der Koksgrus teilweise oder ganz dem Abwasser vor der Filtration zudosiert wird.

5. Verfahren nach Anspruch 1, dadurch gekennzeichnet, daß die Koksgrusmenge 0,1 bis 1 Gew.-% der Abwassermenge beträgt.

6. Verfahren nach Anspruch 1, dadurch gekennzeichnet, daß der beladene Koksgrus durch Verbrennung oder Pyrolyse entsorgt wird.

7. Verfahren nach Anspruch 1, dadurch gekennzeichnet, daß als weitere Behandlungsstufe eine Adsorptionsstufe nachgeschaltet ist.

8. Verfahren nach Anspruch 1, dadurch gekennzeichnet, daß als weitere Behandlungsstufe eine reverse Osmose nachgeschaltet ist.

### Revendications

1. Procédé de séparation d'hydrocarbures, plus particulièrement d'hydrocarbures aromatiques, d'eaux résiduaires, à l'aide d'un adjuvant de filtration adsorbant, caractérisé en ce que l'on sépare les hydrocarbures dissous et non dissous dans l'eau résiduaire en un seul stade ou étage en introduisant les eaux résiduaires dans un filtre à bougies séparatrices et en se servant de poussier ou menu de coke à titre d'adjuvant de filtration adsorbant, dont la répartition granulométrique présente, pour une plage de calibres des particules de 0,05 à 0,2 mm, une fraction massique d'au moins 25% en poids avec une surface d'au moins 1.500 cm²/g.

2. Procédé suivant la revendication 1, caractérisé en ce que la répartition granulométrique du poussier ou menu de coke présente, pour la plage des calibres des particules de 0,05 à 0,2 mm, une fraction massique d'au moins 40% en poids.

3. Procédé suivant la revendication 1, caractérisé en ce que l'on fait parvenir préalablement le poussier ou menu de coke sur la surface filtrante.

4. Procédé suivant la revendication 1, caractérisé en ce que l'on ajoute totalement où partiellement le poussier ou menu de coke à l'eau résiduaire avant de procéder à la filtration.

5. Procédé suivant la revendication 1, caractérisé en ce que la proportion de poussier ou menu de coke constitue de 0,1 à 1% en poids de la quantité de l'eau résiduaire.

6. Procédé suivant la revendication 1, caractérisé en ce que l'on épure le poussier ou menu de coke chargé par combustion ou pyrolyse.

7. Procédé suivant la revendication 1, caractérisé en ce que l'on fait suivre le stade ou l'étage d'adsorption d'un stade ou étage de traitement complémentaire.

8. Procédé suivant la revendication 1, caractérisé en ce que l'étage ou stade de traitement complémentaire qui suit le stade ou l'étage d'adsorption est une osmose inverse.

### Claims

1. A process for separating hydrocarbons, in particular aromatic hydrocarbons, from waste water with an adsorbent filter-aid, characterized in that the hydrocarbons dissolved and undissolved in the waste water are separated in one stage, by the waste water being conveyed to a metal slotted candle filter and coking duff acting as an adsorbing filter-aid, the particle size distribution of the coking duff for the particle range of from 0.05 to 0.2 mm having a mass proportion of at least 25% by weight, with a surface of at least 1500 cm²/g.

2. A process according to Claim 1, characterized in that the particle size distribution of the coking duff for the particle range of from 0.05 to 0.2 mm has a mass proportion of at least 40% by weight.

3. A process according to Claim 1, characterized in that the coking duff is floated onto the filter surface beforehand.

4. A process according to Claim 1, characterized in that the coking duff is metered partly or wholly into the waste water before the filtration.

5. A process according to Claim 1, characterized in that the quantity of coking duff amounts to from 0.1 to 1% by weight of the quantity of waste water.

6. A process according to Claim 1, characterized in that the charged coking duff is disposed of by combustion or pyrolysis.

7. A process according to claim 1, characterized in that an adsorption stage is added afterwards as a further treatment stage.

8. A process according to Claim 1, characterized in that a reverse osmosis is added afterwards as a further treatment stage.

EP 0 330 659 B1